# EUROPEAN PATENT APPLICATION

(11) **EP 0 528 620 A1**
(43) Date of publication of application: **24.02.1993**
(21) Application number: 92307309.2
(22) Date of filing: 11.08.1992
(51) Int. Cl.: G21C 19/307

(54) **Method of inhibiting cobalt release in nuclear reactor coolant water**

(30) Priority: 15.08.1991 US 745294
(71) Applicant: GENERAL ELECTRIC COMPANY, Schenectady, NY 12345 (US)
(72) Inventor: Lin, Chien Chang, Fremont, California 94536 (US)
(74) Representative: Pratt, Richard Wilson

(57) **Abstract**

A method for chemically inhibiting the dispersion of cobalt through the water cooling system of a nuclear fission reactor for reducing the radiation hazard to personnel comprises adjusting the coolant water circulating through the cooling water circuit of a water cooled nuclear fission reactor to a basic pH of up to about 8 with the addition to the coolant water of sodium ions selected from at least one source consisting of sodium hydroxide and sodium charged ion exchange material while maintaining the conductivity of the coolant water at less than 0. 3 microsiemens per centimeter.

## Description

This invention relates to the operation and safety of water cooled nuclear fission reactors, and in particular to means for minimizing the hazards of possible exposure of operating and maintenance personnel to radiation dispersed throughout the coolant water circulating system.

A significant hazard in water cooled nuclear fission reactors is the spread of radioactive substances throughout the circulating system for the coolant water. Operating personnel and maintenance workers can be subjected to radiation from such dispersed radioactive substances within and about many areas of the nuclear reactor plant. Increased radiation and its dispersion within the plant presents both an elevated hazard and economic liability due to restricted work time exposure for workers.

Cobalt, derived from a number of different alloys employed in components of the reactor's mechanisms or structures, is subject to induced radioactivity, especially the cobalt-60 isotope. This radioactive cobalt-60 isotope, or ions or compounds thereof can be carried in the circulating coolant water whereby it is spread and deposited throughout the cooling water circuit or loop system of the reactor plant.

A number of proposals or potential solution to this problem of radiation dispersion have been made. One approach to this potentially hazardous cobalt source of radiation has been the application of zinc as disclosed in several U.S. patents, for example U.S. Letters Patent No. 4,756,874, issued July 12, 1988 and No. 4,759,900, issued July 26, 1988. The disclosure and contents of the aforesaid patents are incorporated herein by reference.

### SUMMARY OF THE INVENTION

This invention comprises a method of inhibiting the release of cobalt from the exposed surfaces of fuel rod and metal and alloy internal components of nuclear fission reactor plants. The method of this invention comprises a chemical measure which enhances the formation of a stable chemical compound form incorporating the cobalt-60 in the fuel surface deposit whereby its dispersion is restricted.

### OBJECTS OF THE INVENTION

It is an object of this invention to provide a method for restricting the dispersion of cobalt throughout the cooling water circuit of a nuclear fission reactor plant.

It is also an object of this invention to provide a method for controlling the distribution of radioactive cobalt-60 within the cooling water circulating system or loop of a nuclear fission reactor plant.

It is a further object of this invention to provide a method for impeding the spread and accumulation of radioactive cobalt within the vessels and conduits providing the coolant water circuit of a nuclear fission reactor plant.

It is a still further object of this invention to provide an effective method for enhancing the safety and protection of nuclear fission reactor plant operating and maintenance personnel from radiation.

It is an additional object of this invention to provide an effective and economical chemical measure for "fixing" cobalt-60 in chemically stable compounds to inhibit its dispersion throughout the cooling water circuit of a nuclear fission reactor plant.

### DETAILED DESCRIPTION OF THE INVENTION

This invention consists of a chemical process for fixing cobalt to inhibit its dispersal throughout a coolant circuit system of a nuclear fission reactor plant.

Cobalt derived from metal alloy materials utilized in nuclear reactor plants is known as a major source of radiation and in turn a health hazard to operating and maintenance personnel. The cobalt, particularly the cobalt-60 isotope, spreads throughout and accumulates within the vessels and conduits of the coolant circuit system. Reducing the presence of cobalt by replacing cobalt containing alloys to minimize its source is expensive and impractical.

In accordance with this invention chemical measures are provided which reduce the material corrosion and the release of cobalt-60 from the surface of metal alloy internal components or structure, such as the fuel units, and as a result thereof, reduces or inhibits the dispersion of cobalt-60 throughout the coolant water system with its resultant accumulation and buildup therein over time.

Cobalt migration is inhibited in accordance with the procedure of this invention by adjusting the pH of the coolant water circulating through the cooling water system of a water cooled nuclear fission reactor to a basic pH condition of up to about 8 at 25°C water temperature, and preferably a pH range of about 7.5 to 8. The pH adjustment of the reactor coolant water is achieved by the addition of sodium ions from a suitable source while maintaining the conductivity of the coolant water at less than 0.3 microsiemens per centimeter, as measured at a temperature of 25°C.

An apt source of the pH adjusting sodium ions comprise sodium hydroxide addition, or a sodium charged ion exchange resin material. In the latter case sodium ions are slowly introduced into the coolant water simply by passing the condensate water though a mass of cation exchange particles charged with sodium in the demineralizer. Other suitable sodium containing agents for pH adjustment comprise sodium oxalate or sodium formate.

The sodium ion induced pH adjustment appears to enhance the formation of a stable cobalt-iron mixed oxide compound, typical of a spinel-type oxide compound.

## Claims

1. A method of inhibiting the release of cobalt-60 from the metal surface of internal components of nuclear fission reactors and the resultant dispersion of cobalt-60 throughout the coolant water circulating through the cooling system of a water cooled nuclear fission reactor,
said method comprising:
adjusting the coolant water circulating through the cooling water circuit of a water cooled nuclear fission reactor to a basic pH of up to about 8 with the addition to the coolant water of sodium ions while maintaining the conductivity of the coolant water at less than 0.3 microsiemens per centimeter.

2. The method of inhibiting the release of cobalt of claim 1, wherein the pH of the nuclear fission reactor coolant water is adjusted to a range of about 7.5 to 8.

3. The method of inhibiting the release of cobalt-60 of claim 1, wherein the pH of the nuclear fission reactor coolant water is adjusted with sodium hydroxide to a range of about 7.5 to 8.

4. A method of inhibiting the release of cobalt-60 of Claim 1 wherein the pH of the reactor coolant water is adjusted with sodium charged ion exchange material to a range of about 7.5 to 8.

5. The method of inhibiting the release of cobalt-60 of any preceding claim, wherein the pH of the nuclear fission reactor coolant water is adjusted to about 8.

6. A method of inhibiting the release of cobalt from the metal surface of internal components of nuclear fission reactors and the resultant dispersion of cobalt-60 throughout the coolant water circulating through the coolant system of a water cooled nuclear fission reactor,
said method comprising:
adjusting the coolant water circulating through the coolant water circuit of a water cooled nuclear fission reactor to a basic pH of up to about 7.5 to 8 with the addition of sodium hydroxide while maintaining the conductivity of the coolant water at less than about 0.3 microsiemens per centimeter.

7. A method of inhibiting the release of cobalt-60 from the fuel deposit and metal surface of internal components of nuclear fission reactors and the resultant dispersion of cobalt throughout the coolant water circulating through the coolant system of a water cooled nuclear fission reactor,
said method comprising:
adjusting the coolant water circulating through the coolant water circuit of a water cooled nuclear fission reactor to a basic pH of up to about 7.5 to 8 by passing at least a portion of the circulating coolant water through a mass of sodium charged cation exchange particles while maintaining the conductivity of the coolant water at less than about 0.3 microsiemens per centimeter.
